Europäisches Patentamt

European Patent Office

Office européen des brevets

(11) Publication number: **0 144 469**
**B1**

## (12) EUROPEAN PATENT SPECIFICATION

(45) Date of publication of patent specification: **26.04.89**

(21) Application number: **83201720.6**

(22) Date of filing: **05.12.83**

(51) Int. Cl.⁴: **B 65 D 5/42**, B 65 D 5/56

(54) A joint on packing containers and a method for the manufacture of the same.

(43) Date of publication of application:
**19.06.85 Bulletin 85/25**

(45) Publication of the grant of the patent:
**26.04.89 Bulletin 89/17**

(84) Designated Contracting States:
**AT BE CH DE FR GB IT LI LU NL SE**

(56) References cited:
**US-A-3 525 465**
**US-A-3 604 613**
**US-A-3 864 186**

(73) Proprietor: **AB TETRA PAK**
**Box 61**
**S-221 00 Lund (SE)**

(72) Inventor: **Sjöstrand, Uno**
**Tulpanvägen 16**
**S-240 32 Flyinge (SE)**
Inventor: **Andersson, Sven**
**Slanbärsvägen 1**
**S-245 00 Staffanstorp (SE)**

(74) Representative: **Bentz, Bengt Christer**
**TETRA PAK INTERNATIONAL AB Patent**
**Department Fack 1701**
**S-221 01 Lund 1 (SE)**

EP 0 144 469 B1

## Description

The present invention relates to a joint on gas-tight packing containers of flexible material whose edge regions overlap one another and are sealed to one another within a sealing zone, whereby the edge region facing towards the inside of the packing container is doubled along a fold line. The invention also relates to a method for the manufacture of a joint on packing containers of flexible material with overlapping edge regions.

Packing containers of the non-returnable type for liquid contents, e.g. milk, juice, carbonated refreshing beverages or beer are frequently manufactured from laminated, flexible material. The laminated material usually comprises a substantially centrally situated carrier layer of relatively thick cardboard or foamed plastic which is covered on either side by thin, liquid-tight layers of thermoplastic material e.g. polyethylene. The polyethylene layers serve not only as liquid-tight layers but also make possible the heat-sealing of the material. The layers included in the material may vary in respect of type as well as number and thickness, and the material comprises e.g. frequently also a layer of high gas-tightness, e.g. aluminium foil.

When the packing material is to be converted to packing containers, the material is usually subjected to a doubling or reshaping to tubular form so that the opposite edges of the material are made to overlap one another. Subsequently the edges are sealed to one another through heating to such a temperature that the thermoplastic layers in contact with one another melt, whereupon the edge regions are compressed with simultaneous cooling so that a liquid-tight joint is produced. This technique is well-known (US—A—3 604 613) and has been considered up to now to provide satisfactory joints, but in types of packages where demands made on gas-tightness are very high it has been found that cracks which endanger the gas-tightness may occur, for example when the flexible packing container is handled so that the joints are subjected to stresses. Since even very small cracks, so-called micro-leakage, can imperil the performance of the gas-tight material layer, it is desirable to provide a type of joint in which the risk of micro-leakage has been eliminated.

It is an object of the present invention to provide a joint on gas-tight packing containers which is not subject to the aforementioned disadvantages.

It is a further object of the present invention to provide a joint of the type mentioned in the introduction which can be produced by conventional thermosealing without extensive modifications of technique.

It is a further object of the present invention to provide a joint for flexible material which in spite of deformation of the material retains its tightness and eliminates any risk of micro-leakage.

These and other objects have been achieved in accordance with the invention in that a joint of the type mentioned in the introduction has been given the characteristic that the sealing zone is situated at a distance from said fold line, which distance is at least 2 times the thickness of the material. By avoiding any sealing up to the said fold line, the formation of an accumulation of molten thermoplastics along the fold line is avoided, which means that the material retains its flexibility so that bucklings and cracks are avoided on deformation of the sealed material.

Preferred embodiments of the joint in accordance with the invention have been given, moreover, the characteristics which are evident from claims 2 and 3.

It is a further object of the present invention to provide a method for the manufacture of a joint on packing containers of flexible material which can be carried out simply and rapidly with packing material and packing machines of a known type.

These and other objects have been achieved in accordance with the invention in that a method of the type mentioned in the introduction has been given the characteristic that the edge regions are compressed at the same time as a bonding agent present between the regions is activated within a portion of this compressed region until a sealing together has taken place.

A preferred embodiment of the method in accordance with the invention has been given, moreover, the characteristics which are evident from subsidiary claims 5 and 6.

The method in accordance with the invention makes it possible rapidly and simply to provide a joint in accordance with the invention which is produced in a substantially conventional manner by thermoplastic sealing and without appreciable modifications of the sealing methods customarily used.

A preferred embodiment of the joint as well as of the method in accordance with the invention will now be described in more detail with special reference to the enclosed schematic drawing which only shows the components required for an understanding of the invention.

Figure 1A shows an enlarged cross-section through a joint in accordance with the invention.

Figure 1B shows the joint in accordance with figure 1A when it is subjected to deformation.

Figure 2A shows on an enlarged scale a cross-section through a joint of the conventional type.

Figure 2B shows the joint in accordance with figure 2A when it is subjected to deformation.

Figure 3 shows a cross-section through a pair of sealing jaws directly before the formation of a joint in accordance with the invention.

Packing containers for certain liquid foodstuffs such as juice, wine or beer are often in the form of non-returnable packages which are made of a flexible, gas-tight material. The material usually comprises several different laminated layers, e.g. a relatively thick and rigid carrier layer 1 of paper or foamed plastic material which comprises at least on the side facing the interior (with contents) of the package a layer 2 of liquid-tight thermoplastics, e.g. polyethylene. The carrier layer is often provided with a corresponding layer on the outside so as to provide the package with an outside which is non-sensitive to moisture and which is attractive. A material with an outside layer of thermoplastics, moreover, is easy to seal, since this can be done through heating of the thermoplastic layers to softening or melting temperature and subsequent compression and cooling of the layers so that they are joined together in a liquid-tight seal. This technique is well-known and much used in the package industry, especially in the manufacture of non-returnable packages for liquid foodstuffs.

Packing material which is to be used for the manufacture of gas-tight packages furthermore include layers adapted to ensure satisfactory gas-tightness. Such a gas-tight layer 3 is appropriately constituted of aluminium foil and is placed between the carrier layer 1 and the thermoplastic layer 2 facing towards the inside of the packing container. This placing means that the gas-tight layer 3 is protected against mechanical damage from outside the package at the same time as it will be possible to provide gas-tight seals. This gas-tight layer 3 (aluminium foil) is sealed to the carrier layer 1 by means of a layer of a suitable adhesive, e.g. a thin layer of polyethylene, hot-melt or some other heat-meltable material. This sealing layer is very thin and for the sake of clarity has not been included in the drawing.

As mentioned earlier it is relatively simple in packing material which comprises outer layers of thermoplastics to provide liquid-tight seals or joints by means of conventional methods. Gas-tight joints too can be achieved in that one of the two edge zones of the material which are to be sealed to one another are doubled prior to the sealing. As is evident from the drawing, the doubling is done appropriately in the edge zone which is facing towards the inside of the package, that is to say towards the contents, which means that the cut edge of the material is protected from the contents at the same time as the gas-tight layers 3 in the two edge zones are substantially assembled together and can be sealed to each other so that in the joint too the gas-tightness of the material remains unbroken.

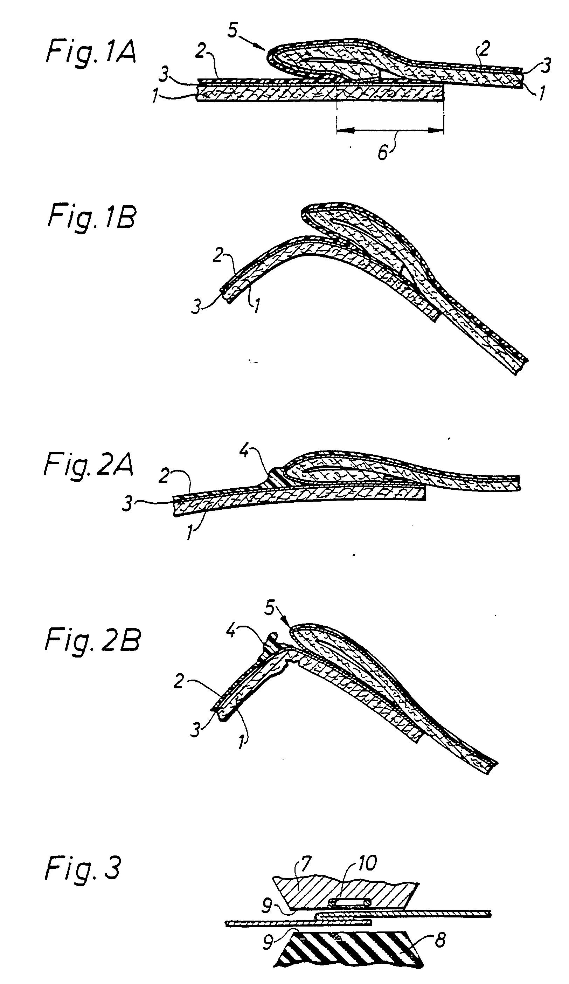

In the conventional sealing of a non-folded edge zone and a doubled edge zone heat and pressure are applied over a region which fully covers the two overlapping edge zones, that is to say the doubled portion as well as the adjoining regions. During the heating up all the thermoplastic material present within the said region will thus be heated and made to flow from the doubled region, where the pressure between the jaws will be maximum, to adjoining regions of lower pressure. This is illustrated in figure 2A which shows a joint realized in the conventional manner where the thermoplastic layers situated between the edge zones have been melted and squeezed out outside the fold line 5 of the doubled edge zone where the thermoplastics forms a longitudinal ridge 4 extending alongside the joint. The two layers 3 of gas-tight material, however, continue to be in good contact with one another in the region of the joint and the gas-tightness of the material is uninterruped. When a material sealed by using this type of joint is subjected to stresses and bends, however, cracks will appear between the longitudinal ridge 4 of thermplastics and the fold line 5 of the doubled edge zone (figure 2B). This is due to the fact that the doubled edge zone and the ridge 4 of solidified thermoplastic cause two parallel stiffening lines which run along the joint, and on deformation of the material jointly direct the folding in such a manner that it occurs immediately below the fold line 5 of the doubled zone where consequently great stresses arise, and ruptures in the thermoplastic layer 2 as well as in the aluminium foil 3 are as food as unavoidable. In the fold line 5 of the doubled zone cracks may also occur, since the thin layer of bonding agent (not shown in the figure), which is present underneath the aluminium foil 3, also melts and endeavours to flow out from the sealing zone. The bonding agent then collects below the aluminium foil 3 along the fold line 5 where, depending on the magnitude of the sealing pressure, it may cause stresses on the aluminium foil strong enough to make it crack.

In order to prevent such crack formation along the joint, which may occur during fairly normal handling of the sealed materials, the sealing zone 6 wherein the two edge regions are sealed to one another has been displaced in relation to the doubled edge zone in accordance with the invention so that the sealing zone 6 is now situated at a distance from the fold line 5 of the material facing towards the inside of the packing container. In figure 1A, which shows greatly enlarged the joint in accordance with the invention, is illustrated how the distance between the sealing zone 6 and the fold line 5 of the material facing towards the inside of the packing container is more than two times the thickness of the material. This displacement of the boundary line of the sealing zone 6 situated closest to the fold line 5 means that the layers 2 of thermoplastics situated between the edge zones are not heated to melting temperature in the region at and below the fold line 5 during the sealing and consequently are not squeezed out from the space between the compressed edge regions. Neither does the flow in the layer of adhesive (thermoplastics) between the aluminium foil and the carrier layer mentioned earlier occur to the same extent and the risk of crack formation (bursting) of the aluminium foil layer along the fold line 5 is eliminated. As a result the formation of a ridge along the fold line 5 is also prevented so that the flexibility of the material is retained. On bending or deformation in accordance with figure 1B the stresses are distributed so that the bending takes place within a considerably larger area than in previously known joints of the type shown in figure 2. Consequently no concentration of stresses bringing about crack formation in the gas-tight layer 3 is caused, but the latter remains intact even under fairly forcible deformation of the joint.

The joint in accordance with the invention has been described as being carried out appropriately with flexible material comprising outer thermoplastic layers, but it is obvious that the principle and the design of the joint work equally well when the seal is accomplished with the help of any additional agent e.g. hot-melt.

The method for the formation of a joint in accordance with the invention differs from the conventional method described previously in that the thermoplastic layer serving as a bonding agent is heated only within a sealing zone 6 of a limited width, which sealing zone, moreover, does not extend to the fold line 5 of the edge region which is located inside the packing container. More particularly the joint in accordance with the invention is produced in that the edge regions, one of which is doubled, are compressed at the same time as bonding agent present between the regions is activated within a portion of the compressed region, until sealing together has taken place. The bonding agent is activated appropriately through heating within the sealing zone 6 which extends at some distance from the fold line 5 facing towards the inside of the packing container. The compression of the two edge regions is not limited to the region of the sealing zone 6 but also extends on either side of the sealing zone 6 as well as the edge regions of the material, thus ensuring that a uniform compression is taking place inside as well as outside the sealing zone 6, as a result of which no appreciable flow of molten thermoplastics will occur from the sealing zone 6. With the preferred type of material described, which comprises a gas-tight layer 3 of aluminium foil it is appropriate, moreover, to heat the thermoplastics within the sealing zone 6 through induction heating which will be described in greater detail in the following.

In figure 3 is illustrated schematically an arrangement for the realization of the method in accordance with the invention. The arrangement comprises two manoeuvrable sealing jaws 7, 8 suspended in a stand (not shown in the drawing). The sealing jaws are movable to and fro, in a direction towards one another e.g. by means of hydraulic devices, and are provided with plane working surfaces 9 facing towards one another. A little inside of, or on the same level as, the working surface 9 of one of the sealing jaws there is an induction coil 10 located in the sealing jaw which via connection leads, not shown in the drawing, can be joined to an external source of high-frequency a.c. The induction coil defines the region of the sealing jaw 7 heating the material which during the sealing coincides with, and forms, the sealing zone 6. The induction coil 10 or the region heating the material is thus narrower than the edge regions of the materials which are to be sealed to one another and in conformity with the desired sealing zone 6 located at some distance inside the fold line 5 of the inner edge region. As is also evident from figure 3 the sealing jaws 7, 8 extend with their working surfaces 9 well outside the free edges of the two edge regions so as to ensure a uniform compression of the material in the whole joint region and prevent undesirable flow of molten thermoplastics. The sealing jaw 8 serving as a counter-jaw is made of a resilient material, e.g. rubber, so as to guarantee complete contact over the whole working surface in spite of the varying thickness of the sealed material.

The joint in accordance with the invention together with the method for producing the joint allow the joining of laminated packing material which comprises gas-tight layers of aluminium foil with safety against leakage not achieved previously, especially during subsequent handling and deformation of the packing container on which the joint is present. Thus the long-term storage of gas-sensitive liquid foodstuffs in relatively inexpensive non-returnable packages is made possible without any danger of a deterioration of the quality of the foodstuffs.

## Claims

1. A joint on gas-tight packing containers of flexible material whose edge regions overlap one another and are sealed to one another within a sealing zone, whereby the edge region facing towards the inside of the packing container is doubled along a fold line (5), characterized in that the sealing zone (6) is situated at a distance from said fold line (5), which distance is at least 2 times the thickness of the material.

2. A joint in accordance with claim 1, characterized in that the edge regions within the sealing zone (6) are sealed by means of a heat-meltable bonding agent.

3. A joint in accordance with one or more of the preceding claims, characterized in that the packing material includes an outer layer (2) of thermoplastics.

4. A method for the manufacture of a joint on packing containers of flexible material with overlapping edge regions in accordance with one or more of the preceding claims, characterized in that the edge regions are compressed at the same time as a bonding agent present between the regions is activated within a portion of this compressed region until a sealing together has taken place.

5. A method in accordance with claim 4, characterized in that the bonding agent is activated through heating within a sealing zone (6) which extend at some distance from a fold line (5) facing towards the inside of the packing container.

6. A method in accordance with claim 5, characterized in that the heating of the material which comprises electrically conducting layers is done through induction.

## Patentansprüche

1. Verbindung an gasdichten Verpackungsbehältern aus flexiblem Packstoff, dessen Randzonen einander überlappen und miteinander in einer Schweißzone verschweißt sind, wobei die zum Inneren des Verpackungsbehälters weisende Randzone entlang einer Faltlinie (5) verdoppelt ist, dadurch gekennzeichnet, daß die Schweißzone (6) in einem Abstand von der Faltlinie (5) liegt, der wenigstens das Zweifache der Packstoffstärke beträgt.

2. Verbindung nach Anspruch 1, dadurch gekennzeichnet, daß die Randzonen innerhalb der Schweißzone (6) durch ein heißschmelzbares Bindemittel dicht verbunden sind.

3. Verbindung nach einem oder mehreren der vorhergehenden Ansprüche, dadurch gekennzeichnet, daß der Packstoff eine Außenschicht (2) aus Thermoplast aufweist.

4. Verfahren zur Herstellung einer Verbindung an Verpakkungsbehältern aus flexiblem Packstoff mit überlappenden Randzonen gemäß einem oder mehreren der vorhergehenden Ansprüche, dadurch gekennzeichnet, daß die Randzonen druckbeaufschlagt werden, während gleichzeitig ein zwischen ihnen vorhandenes Bindemittel innerhalb eines Teils dieses druckbeaufschlagten Bereichs aktiviert wird, bis ein Verschweißen stattgefunden hat.

5. Verfahren nach Anspruch 4, dadurch gekennzeichnet, daß das Bindemittel durch Erwärmen innerhalb einer Schweißzone (6) aktiviert wird, die sich in einigem Abstand von einer dem Inneren des Verpackungsbehälters zugewandeten Faltlinie (5) erstreckt.

6. Verfahren nach Anspruch 5, dadurch gekennzeichnet, daß das Erwärmen des Packstoffs, der elektrisch leitfähige Schichten umfaßt, durch Induktion erfolgt.

**Revendications**

1. Joint sur des récipients d'emballage étanches au gaz, en matière flexible dont les régions de bord se chevauchent mutuellement et sont jointes l'une à l'autre dans une zone de jonction, de sorte que la région de bord tournée vers l'intérieur du récipient d'emballage est rabattue sur elle-même ou doublée le long d'une ligne de pliage (5), caractérisé en ce que la zone de jonction (6) est située à une certaine distance de ladite ligne de pliage (5), cette distance étant au moins double de l'épaisseur de la matière.

2. Joint suivant la revendication 1, caractérisé en ce que les régions de bord dans la zone de jonction (6) sont jointes au moyen d'un agent de jonction fondant à chaud.

3. Joint suivant une ou plusieurs des revendications précédentes, caractérisé en ce que la matière d'emballage comprend une couche extérieure thermoplastique (2).

4. Procédé pour la fabrication d'un joint sur des récipients d'emballage en matière flexible, à régions de bord en chevauchement, suivant une ou plusieurs des revendications précédentes, caractérisé en ce que les régions de bord sont comprimées en même temps qu'un agent de jonction présent entre les régions est activé à l'intérieur d'une partie de cette région comprimée, jusqu'à ce qu'une jonction soit obtenue.

5. Procédé suivant la revendication 4, caractérisé en ce que l'agent de jonction est activé par chauffage dans une zone de jonjction (6) qui s'étend à une certaine distance d'une ligne de pliage (5), en regard de l'intérieur du récipient d'emballage.

6. Procédé suivant la revendication 5, caractérisé en ce que le chauffage de la matière, qui comprend des couches électriquement conductrices, est effectué par induction.

*Fig. 1A*

*Fig. 1B*

*Fig. 2A*

*Fig. 2B*

*Fig. 3*